# EUROPEAN PATENT APPLICATION

(11) **EP 2 610 068 A1**
(43) Date of publication of application: **03.07.2013**
(21) Application number: 12175099.6
(22) Date of filing: 05.07.2012
(51) Int. Cl.: B44C 5/06, G09B 19/00, G09B 23/00, A01G 5/00

(54) **Ornament for plant**

(30) Priority: 27.12.2011 JP 2011007715 U
(71) Applicant: Flower Message Ohanayasan Inc., Tokyo (JP)
(72) Inventor: Hokuto, Hisayuki, Tokyo, Tokyo (JP)
(74) Representative: Betten & Resch

(57) **Abstract**

The ornament for fresh flower has, for example, the first decorative part encloses and maintains on the stem side of fresh flower, the second decorative part of the image of a doll's head and the third decorative part of the image of the doll's body. The first decorative part, the second decorative part and the third decorative part are packed and sold in bags separately (Individually)

## Description

This application is claims priority under 35 U.S.C. §119 to Japanese Patent Application No. 2011-007715, filed December 27, 2011, which is incorporated in its entirety by reference.

### FIELD OF INVENTION

The present invention relates to an ornament for ornamenting plant.

### BACKGROUND

Most of picks for flower arrangement of prior arts are used by inserting acute objects such as long steel wire to ornaments.
However, the picks for flower arrangement of the prior arts have an acute tip, therefore need to be handled with care. In addition, design is not integrated with the plants.
Also, there is much demand to obtain biological information of the plant with high accuracy and output the information. However, it is difficult to obtain biological information of the plant with high precision by using conventional method.

In order to solve the disadvantage and achieve the objectives, aim to provide ornament is able to decorate plants such as fresh flowers integrated and can be handled easily.
Also, this invention aim to provide ornament for plants able to obtain biological information of plants accurately.

### SUMMARY OF THE INVENTION

This invention is made in view of this situation, and the purpose of the present invention is to provide an ornament which can ornaments plant such as fresh flower integrally and can be handled easily.
Another purpose of the present invention is to provide an ornament for plants able to obtain biological information of plants accurately.
This invention is an ornament for plant comprising a thorough-hole to which a stem of the plant may be penetrated.

Preferable the ornament for plant of the present invention further comprising further comprising a movement restriction means for restricting movement of the ornament along the stem in a state the stem is penetrated into the through-hole.

Preferable the ornament for plant of the present invention further comprising an electrode insert hole which reaches the through-hole from outside,
a first glass electrode which is inserted into the electrode insert hole in the state capable of being removed when the stem is inserted into the thorough-hole and comprises a glass tube having a tip which is inserted into the stem, and
a voltage detection means for detecting a voltage between an electrical potential of the first glass electrode and a predetermined standard electrical potential.

Preferable the ornament for plant of the present invention wherein the tip of the first glass electrode has a hole not larger than 1 micro m in diameter,
and the glass tube is filled with 2 to 4 mol / 1 of calcium chloride solution, the ornament for plant further comprising a silver streak,
wherein one end of the silver streak is placed in the calcium chloride solution and the other end is connected to the voltage detection means.

Preferable the ornament for plant of the present invention further comprising
a second glass electrode comprises a glass tube having a tip which is inserted into the stem, and
the voltage detection means detects the voltage by using electrical potential of the second glass electrode as the standard electrical potential.
Preferable the ornament for plant of the present invention further comprising
an output means for perform output according to the voltage detected by the voltage detection means.
Preferable the ornament for plant of the present invention comprising a plurality of decorative parts have the through-hole.

According to the present invention, ornament for plants that can be integrated with plants such as fresh flowers and handled easily.
In addition, according to the present invention, ornament is able to obtain biological information of plants accurately and the information can be provided.

### BRIEF DESCRIPTION OF THE DRAWINGS

Fig.1 is a front view of the ornament for fresh flower attached to a fresh flower relating to the embodiment of the present invention.
Fig.2 is a diagram for explaining the through-hole for stem formed in the ornament for fresh flowers shown in Fig.1
Fig.3 is a side view of the ornament for fresh flower shown in Fig.1.
Fig.4 is an exploded view of the ornament for fresh flower shown in Fig.1.
Fig.5 is a diagram for explaining for other examples of ornament for fresh flower of the present invention.
Fig.6 is a diagram for explaining the configuration of an appearance for the ornament for flower of second embodiment of the present invention.
Fig.7 is a diagram for explaining the glass electrode for the stem.
Fig.8 is a block diagram in system of the ornament for the flower.

### DETAILED DESCRIPTION OF THE INVENTION

Hereinafter, an ornament for fresh flowers (picks for flower arrangement) relating to embodiment of the present invention, will be explained by using drawings.

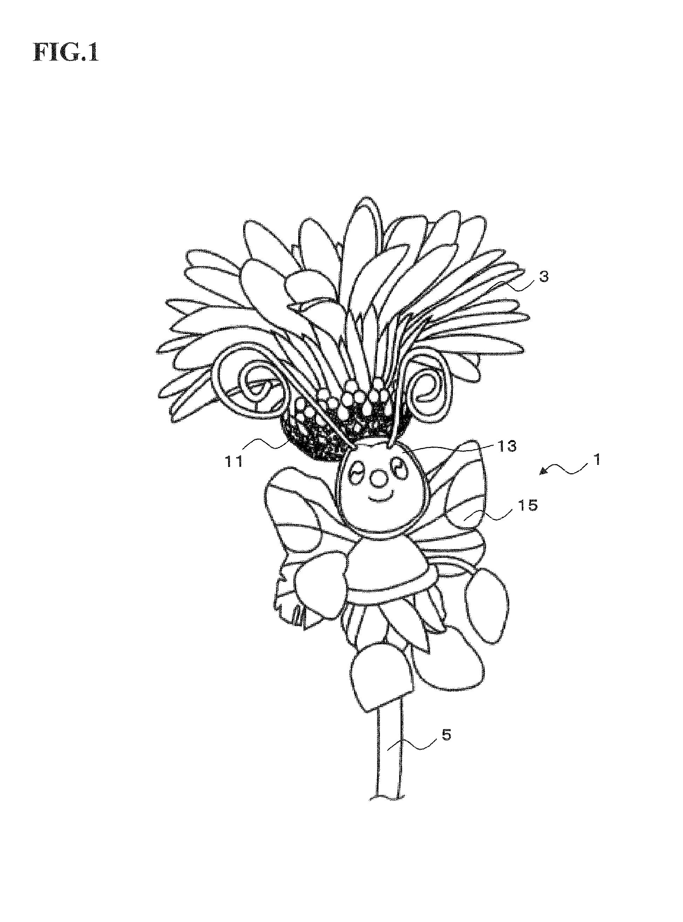

Fig. 1 is a front view of the ornament for fresh flower 1 attached to fresh flower relate to an embodiment of the present invention.

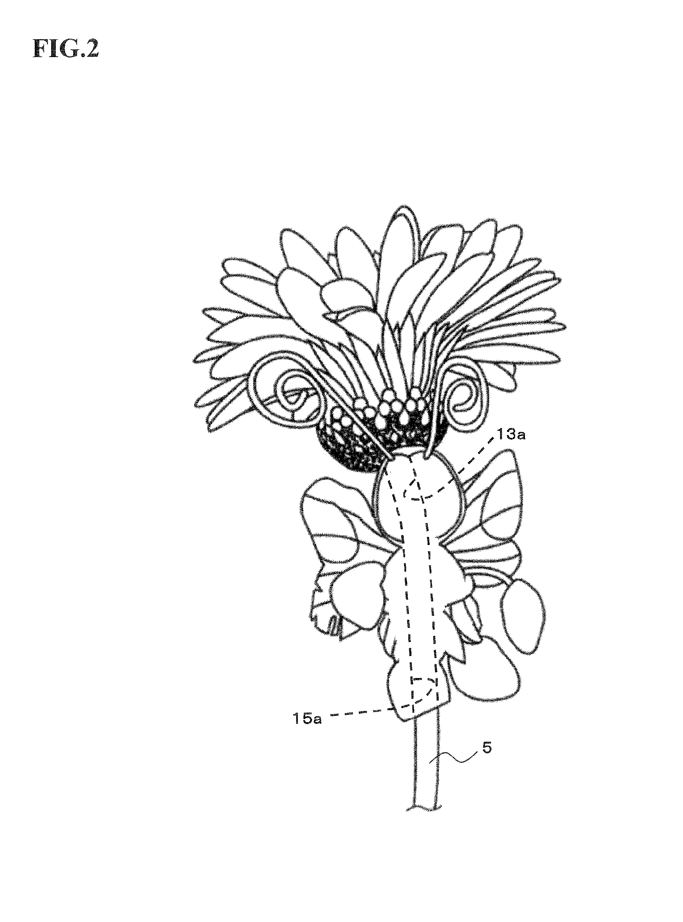

Fig. 2 is drawing explains through-hole for stem formed in the ornament for fresh flower 1 shown in fig. 1 .

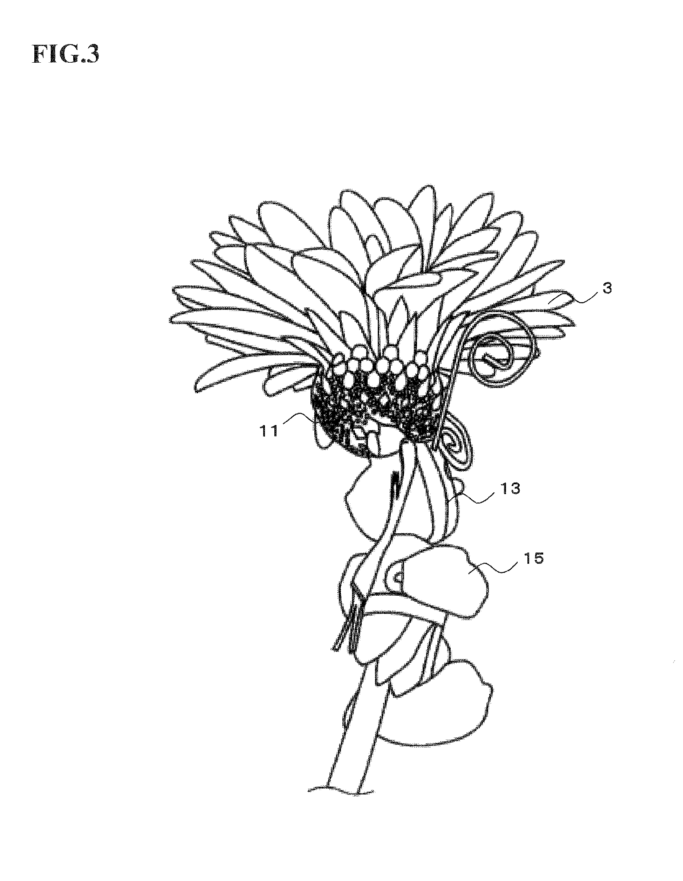

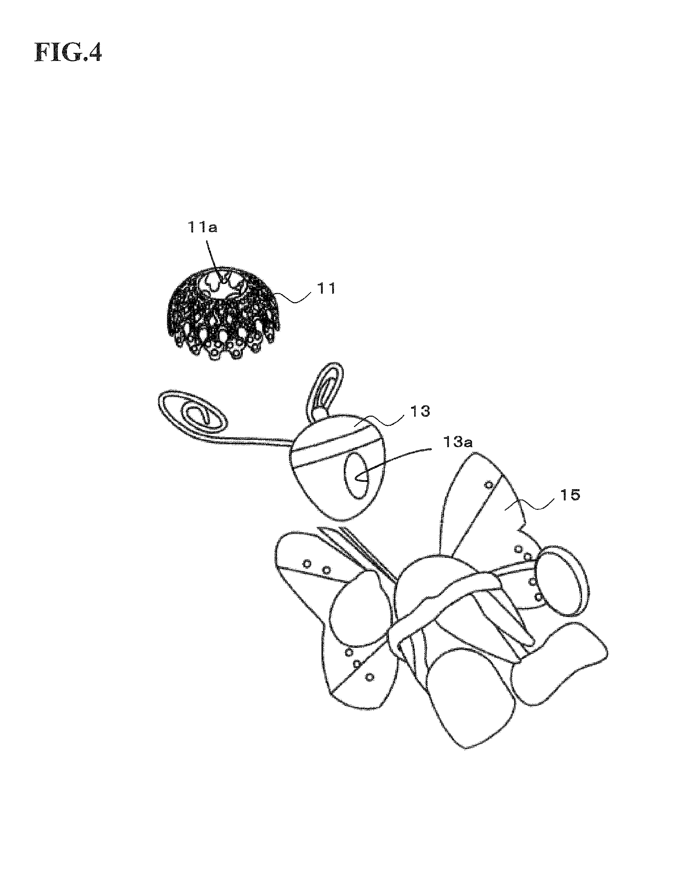

Fig. 3 is side view of the ornament for fresh flower 1 in Fig. 1 , and Fig. 4 is exploded view of the ornament for fresh flower 1.

As shown in Fig. 1 and Fig. 2 , the ornament for fresh flower 1 is attached to the stem 5 of the fresh flower 3, and by integrating with the fresh flower 3, it achieves decorative performance.
As shown in Fig. 3 , for example, the ornament for fresh flower 1 has the first decorative part 11 which encloses and maintains on the stem 5 side of the fresh flower 3, the second decorative part 13 of the image of a doll's head and the third decorative part 15 of the image of the doll's body.

As shown in Fig.4, the opening 11 a is formed in the center of the first decorative part 11. The shape of first decorative part 11 is from the image of the crown. As shown in Fig.1 and 2, the first decorative part 11 is located to enclose side of the stem 5 of the fresh flower 3 while the ornament for fresh flower 1 is attached to the fresh flower 3, it achieves decorative performance by integrating with the fresh flower 3 and the stem 5.

As shown in Fig.2, the second decorative part 13 has the stem penetrate hole 13a formed along central axis, and shaped the image of the doll's head.
As shown in Fig.2, the third decorative part 15, has the stem penetrate hole 15a formed along central axis, and shaped the image of the doll's body.

As shown in Fig.4, the ornament for fresh flower 1 is packed and sold in bags in the state that the first decorative part 11, the second decorative part 13 and the third decorative part 15 are separated.

User of the ornament for fresh flower 1, for example, when the ornament for fresh flower 1 is attached into the fresh flower 3 and the stem 5, firstly, insert the stem 5 into the opening 11a of the first decorative part 11 with position shown in Fig.1, then move them to the fresh flower 3.
Next, the user insert the stem 5 into the stem penetrate hole 13a of the second decorative part 13 and move them to the first decorative part 11. Afterward, the user insert the stem 5 into the stem penetrate hole 15a of the third decorative part 15 and move them to the second decorative part 13.

Herewith, the ornament for fresh flower 1 is attached to the fresh flower 3 and the stem 5.

According to the ornament for fresh flower 1, the ornament is safe and easy to handle because there is no sharp point at the tip.
Moreover, according to the ornament for fresh flower 1, the ornament is attached to the fresh flower 3 and the stem 5 directly, therefore integrated with the fresh flower 3 and the stem 5, it achieves decorative performance. Users' buying intension is aroused by displaying the ornament for fresh flower 1 attached into the fresh flower 3 and the stem 5.

### [Second embodiment]

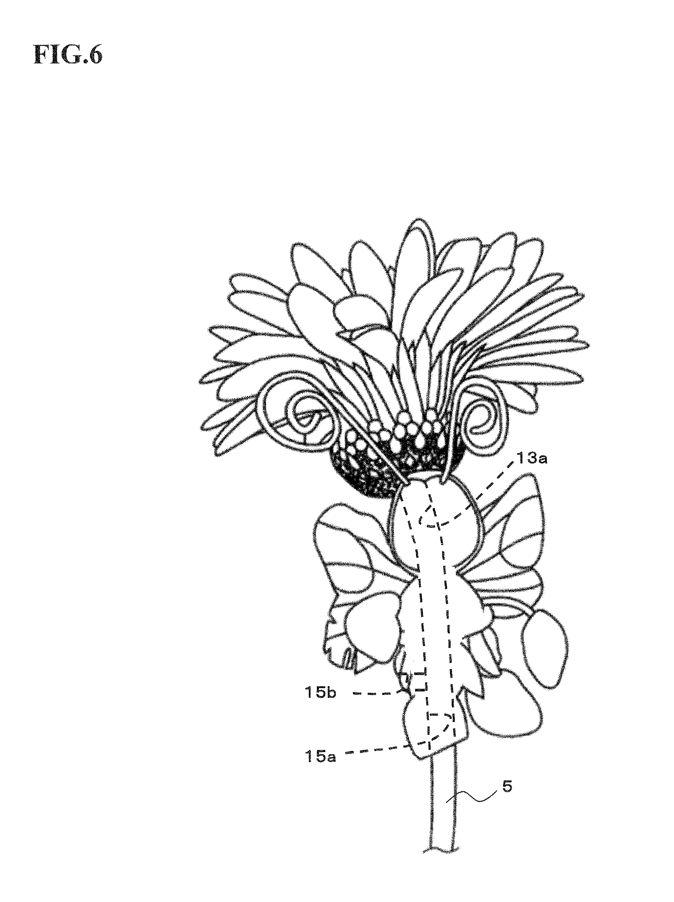

Fig.6 is a drawing to explain the structure of the appearance of the ornament for fresh flower 101 in the second embodiment of the present invention.

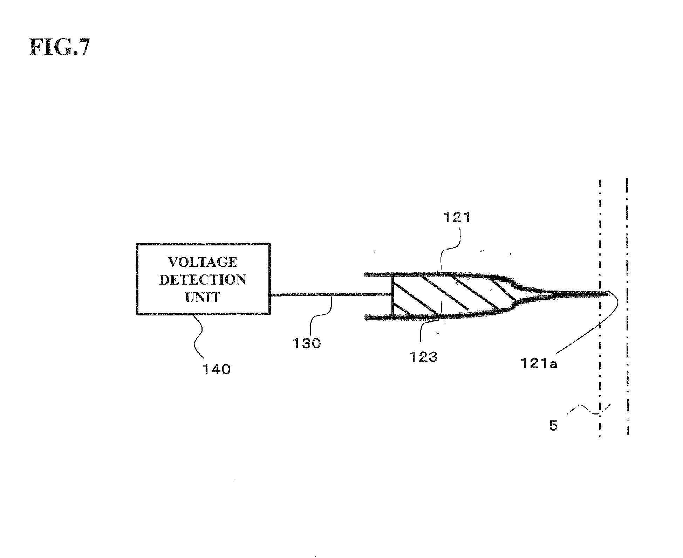

Fig. 7 is a drawing for explaining the glass electrode for stem 120.

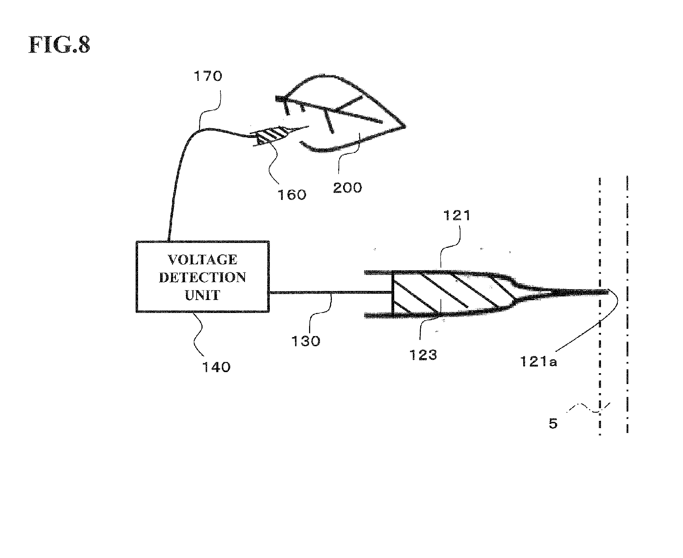

Fig. 8 is a systematic block diagram of the ornament for fresh flower 101.
As shown in Fig.6, basically the appearance of the ornament for fresh flower 101 and the ornament for fresh flower 1 in first embodiment described above are same.
The ornament for fresh flower 101 has the electrode insert hole 15b which reaches the stem penetrate hole 15a from surface of the outside in the third decorative part 15.

The electrode insert hole 15b is used for stabbing the tip of the glass electrode for stem 120 to the stem 5 after the stem 5 is penetrated into the stem penetrate hole 13aand the ornament for fresh flower 101 is attached and fastened to the stem 5.
The glass electrode for stem 120, as shown in Fig. 7, is constituted by the tapered glass tube 121, the hole 121 a is formed on the tip of the glass tube 121.
The glass electrode for stem 120 is able to take the electrode insert hole 15b in and out.

The glass electrode for stem 120 is filled with calcium chloride solution 123 of 2 to 4 mol/l.
The size of plant cell is typically in the rage several tens micro m to several hundreds micro m. In order to insert the electrode into cells without affecting the basic activity of cells, tip of the electrode must be less than 1 micro m in diameter.
The reason why the glass tube 121 is filled with high concentrated calcium chloride solution 123 of 2 to 4 mol/l is holes at tip of the electrode are very small, therefore the solution prevent higher electrode's internal resistance.

As mentioned above one end of the silver streak 130 is placed in the calcium chloride solution 123 which is in the glass tube 121
The other end of the silver streak 130 is connected to the voltage detection unit 140.
The voltage detection unit 140 detects the voltage between the silver streak 130 (Voltage of the stem 5's tip of the glass electrode for stem 120) and prescribed standard voltage.
The voltage detection unit 140 is, for example, a digital multi-meter.

The output portion 150 performs predefined output process based on voltage detected by the voltage detection unit 140.
Output process is, for example, a displaying voltage value on display or outputting process to computer.
Also, when driving means for moving the head and body of the doll is equipped, it is possible to control of the driving means as the output process. Further, the output process is, for example, process of specifying and displaying the stress value correspond to the detected voltage base on the table defining the correspondence between the stress value indicating the degree of plant's stress and voltage value in advance.

The ornament for fresh flower 101 can obtain the bio-information of fresh flowers in real time and output information by determining the stem 5's electronic potential.

Hereinafter, variation of the second embodiment will be explained.
In the present embodiment, as shown in Fig.8, the glass electrode for leaf 160 further comprise a glass tube with acute tip to stab on the surface of a leaves of the fresh flowers.
The structure of the glass electrode for leaf 160 is the same as the glass electrode for stem 120 described above.
A plurality of glass electrode for leaf 160s are attached to each different leaf 200.
One end of the silver streak 170 is placed in glass tubes of the calcium chloride solution in each glass electrode for leaf 160.
The other end of the silver streak 170 is connected to the voltage detection portion 140.
The voltage detection portion 140 detects voltage between the electrical potential of each silver streak 170 in the glass electrode for leaf 160, and the electrical potential of the silver streak 130 of the glass electrode for stem 120.
By comparing electrical potential of the leaf 200 and the stem (standard electronic potential) and detecting voltage, it is possible to obtain and output each leaf's biological information.

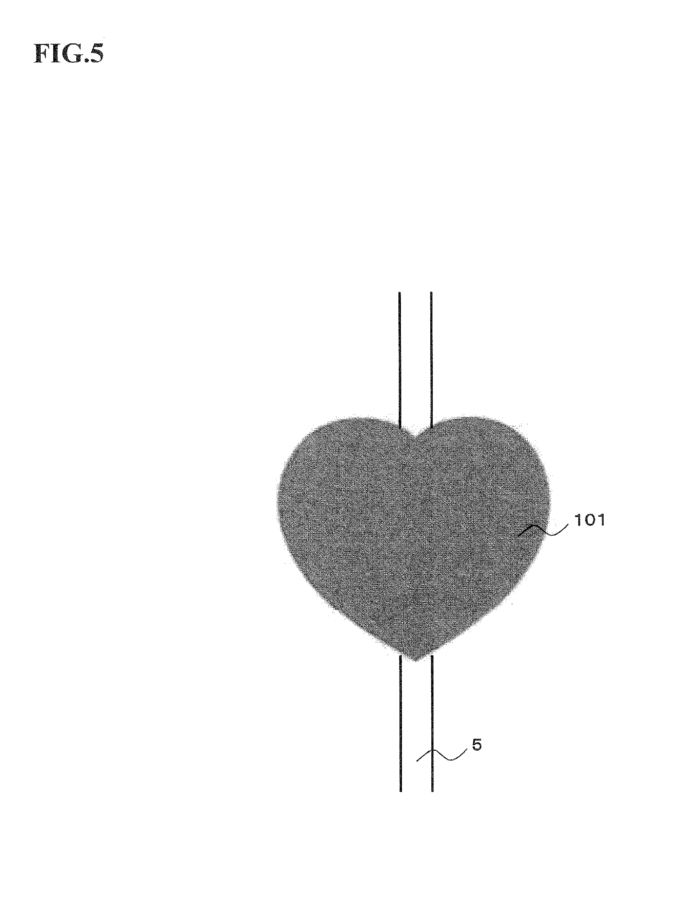

The invention is not limited in embodiment described above.
Therefore, skilled person can carried out various modifications, combinations, sub-combinations or alternatives regarding components of aforementioned present embodiment in inside the technical scope or scope of an equivalent.
For example, image of the doll with crown is used in aforementioned embodiment, heart-shaped, tubular and plate-like shape can be used as shown in Fig. 5 as the shape is not particularly limited.

In embodiment mentioned above, decorative parts combination of the first decorative part 11, the second decorative part 13 and the third decorative part 15 are illustrated, but 2 or more than 4 of decorative parts are able combine, as well as only one part of decorative parts.

In addition, lower side of Figure of the third decorative part 15, prevent the third decorative part 15move downward along the stem 5, put clips as means for movement restriction to restrict the movement of the third decorative part 15.

### INDUSTRIAL APPLICABILITY

This invention is applicable to the ring manufacture method by processing a metal object.

### EXPLANATIONS OF LETTERS OR NUMERALS

1, 101 ornament for fresh flower
3 fresh flower
5 stem
11 first decorative part
13 second decorative part
15 third decorative part
11a opening
13a,15a stem penetrate hole
15b electrode insert hole
120 glass electrode for stem
121 glass tube
130 silver streak
140 voltage detection portion
150 output portion
160 glass electrode for leaf
200 leaf

## Claims

1. An ornament for plant, comprising:
a thorough-hole to which a stem of the plant may be penetrated.

2. An ornament for plant as set forth claim 1 further comprising:
a movement restriction means for restricting movement of the ornament along the stem in a state the stem is penetrated into the through-hole.

3. An ornament for plant as set forth claims 1 or 2 further comprising:
an electrode insert hole which reaches the through-hole from outside,
a first glass electrode which is inserted into the electrode insert hole in the state capable of being removed when the stem is inserted into the thorough-hole and comprises a glass tube having a tip which is inserted into the stem, and
a voltage detection means for detecting a voltage between an electrical potential of the first glass electrode and a predetermined standard electrical potential.

4. An ornament for plant as set forth claim 3,
wherein the tip of the first glass electrode has a hole not larger than 1 micro m in diameter,
the glass tube is filled with 2 to 4 mol / 1 of calcium chloride solution, the ornament for plant further comprising a silver streak,
one end of the silver streak is placed in the calcium chloride solution and the other end is connected to the voltage detection means.

5. An ornament for plant as set forth claims 3 or 4 further comprising:
a second glass electrode comprises a glass tube having a tip which is inserted into the stem, and
the voltage detection means detects the voltage by using electrical potential of the second glass electrode as the standard electrical potential.

6. An ornament for plant as set forth in one of claims 3 to 5 further comprising:
an output means for perform output according to the voltage detected by the voltage detection means.

7. An ornament for plant as set forth in one of claims 1 to 6 further comprising:
a plurality of decorative parts have the through-hole.
